# FASCICULE DE BREVET EUROPEEN

(11) **EP 0 514 236 B1**
(45) Date de publication et mention de la délivrance du brevet: **11.01.1995**
(21) Numéro de dépôt: 92401207.3
(22) Date de dépôt: 28.04.1992
(51) Int. Cl.: F02B 31/00, F02M 35/10, F02M 25/06

(54) **Procédé d'introduction de gaz additionnels pour un moteur à combustion interne**
Verfahren zum Einleiten von zusätzlichem Gas für eine Brennkraftmaschine
Method for introducing additional gas for an internal combustion engine

(30) Priorité: 14.05.1991 FR 9105788
(43) Date de publication de la demande: 19.11.1992
(73) Titulaire: REGIE NATIONALE DES USINES RENAULT S.A., 92109 Boulogne Billancourt (FR)
(72) Inventeur: Roy, Jean-Pierre, F-92100 Boulogne (FR)

(56) Documents cités:
- CH-A- 445 945
- GB-A- 2 087 480
- GB-A- 2 140 504
- US-A- 4 300 504
- US-A- 4 411 226

## Description

La présente invention a pour objet un procédé d'introduction de gaz additionnels pour un moteur à combustion interne, équipant notamment les véhicules automobiles. L'invention a également pour objet un dispositif pour la mise en oeuvre de ce procédé.

Elle vise particulièrement un procédé d'introduction de gaz auxiliaires ou additionnels pour un moteur à combustion interne multisoupapes comportant deux conduits d'admission par cylindre.

Les normes concernant la pollution et la consommation des moteurs à combustion interne, et en particulier des moteurs à essence ou à allumage commandé, se sévérisent chaque jour davantage dans l'ensemble des pays industrialisés. L'industrie automobile est donc occupée aujourd'hui à trouver des solutions techniques pour satisfaire à ces contraintes et ce sans trop pénaliser ni les performances des moteurs ni leur prix de revient.

Deux voies ont été particulièrement étudiées par les motoristes : la recirculation des gaz brûlés, plus connue sous la dénomination EGR, et l'appauvrissement du mélange combustible en carburant, par introduction d'air frais supplémentaire.

La première approche vise plus particulièrement la réduction de la pollution, elle consiste classiquement à assurer un bouclage partiel entre l'échappement et l'admission de manière à abaisser les émissions d'oxydes d'azote.

La seconde approche vise elle à réduire la consommation en carburant en diminuant la richesse du mélange. La richesse en carburant du mélange admis dans les cylindres est réduite lors de certaines conditions de fonctionnement du moteur, par adjonction d'air frais supplémentaire de manière à former un mélange combustible dit "pauvre".

Pour favoriser la combustion d'un tel mélange pauvre, il est nécessaire de générer une forte turbulence à l'intérieur des chambres de combustion, les caractéristiques de cette turbulence devant être adaptées aux conditions de fonctionnement du moteur : régime, charge, température d'eau, etc... .

Différents dispositifs ont été développés opérant simultanément l'adjonction de gaz additionnels et provoquant une forte turbulence. On peut citer le brevet FR n° 2.486.156 qui décrit un moteur qui comporte en plus d'un conduit principal d'admission débouchant dans un cylindre, un conduit secondaire d'admission de diamètre plus petit dont l'orifice de sortie est situé juste avant la soupape d'admission et orienté de façon que le jet de gaz provenant du conduit secondaire engendre des tourbillons hélicoïdaux générant une turbulence encore appelée "swirl". Le brevet US n° 4.628.879 montre une application de cette technologie dite du "jet d'air" à un moteur à deux soupapes d'admission par cylindre où le conduit d'admission secondaire débouche dans un seul des conduit d'admission.

De même, le document US-A-4411226 décrit un dispositif d'introduction de gaz additionnels, où la chambre de combustion est alimentée en air comburant par au moins un conduit d'admission principal débouchant dans ladite chambre par un siège sur lequel peut s'appliquer une soupape, avec deux conduits d'admission secondaires connectés chacun à au moins un circuit d'amenée en gaz additionnels ces conduits secondaires débouchant dans ledit conduit de façon à pouvoir injecter les gaz additionnels dans la chambre de combustion à travers ledit siège.

Des études ont montrées qu'une autre forme de turbulence, appelée encore "tumble", formée par des tourbillons évoluant en rouleau (axe de rotation horizontal, contrairement au "swirl" d'axe vertical) est encore plus favorable, dans certaines conditions de fonctionnement du moteur, que le "swirl".

Ainsi le document US-A-4300504 décrit un procédé d'introduction des gaz additionnels, pour un moteur à combustion interne comportant au moins une chamnbre de combustion cylindrique, et un dispositif d'introduction de gaz additionnels avec deux conduits d'admission secondaires qui sont dirigés de façon que des gaz additionnels, sortant simultanément des deux orifices engendrent deux jets des gaz additionnels dans ladite chambre de combustion sensiblement parallèles et symétriques de part et d'autre du plan médian vertical.

Le but de l'invention est donc de proposer un procédé d'introduction de gaz additionnels, de conception simple et économique, qui permette tout à la fois d'introduire de l'air frais et/ou des gaz d'échappement et d'adapter les turbulences "swirl" ou "tumble".

Selon l'invention, le procédé d'introduction de gaz additionnels, pour un moteur à combustion interne équipant notamment un véhicule automobile et comportant au-moins une chambre de combustion cylindrique est caractérisé en ce que pour certaines plages de valeurs prédéfinies d'un ou de plusieurs paramètres de fonctionnement dudit moteur, un dispositif d'introduction de gaz additionnels actionne deux jets parallèles de gaz additionnels qui pénètrent simultanément dans la chambre de combustion de façon symétrique de part et d'autre d'un plan médian vertical, pour provoquer dans ladite chambre une turbulence de type rouleau ou "tumble".

Selon une autre caractéristique du procédé, pour d'autres plages de valeurs prédéfinies d'un ou de plusieurs paramètres de fonctionnement dudit moteur, ledit dispositif d'introduction actionne seulement un jet de gaz additionnels qui pénètre de façon excentrée dans la chambre de combustion , pour provoquer dans ladite chambre une turbulence de type hélicoïdale ou "swirl".

Ainsi en pilotant la mise en oeuvre des deux jets il est possible de générer à la fois une dilution du mélange et une turbulence, tantôt "swirl" ou "tumble", qui soient parfaitement adaptées au fonctionnement du moteur.

Selon une autre caractéristique du procédé, les gaz additionnels sont formés d'air frais et/ou de gaz d'échappement.

Ainsi il est possible de faire varier la forme des turbulences mais également la nature des gaz additionnels ce qui permet d'optimiser le fonctionnement du moteur, tant en terme de dépollution que de réduction de la consommation dans une large plage de régimes.

L'invention concerne également un moteur à combustion interne avec un dispositif pour la mise en oeuvre du procédé suivant l'invention.

Le dispositif d'introduction de gaz additionnels concerne un moteur à combustion interne ayant une chambre de combustion alimentée en air comburant par au moins deux conduits d'admission principaux débouchant chacun dans ladite chambre par un siège distinct sur lequel peut s'appliquer une soupape.

Selon l'invention, le dispositif d'introduction comprend deux conduits d'admission secondaires connectés chacun à au moins un circuit d'amenée en gaz additionnels, ces conduits secondaires débouchant dans un conduit principal correspondant, de façon à pouvoir injecter les gaz additionnels dans la chambre de combustion à travers ledit siège.

Chacun des conduits secondaires alimentant la chambre de combustion débouche dans son conduit principal par un orifice de sortie situé avant la soupape d'admission et dirigé de façon que des gaz additionnels, sortant simultanément des deux orifices, engendrent deux jets de gaz additionnels dans ladite chambre sensiblement parallèles et symétriques de part et d'autre du plan médian vertical.

Selon l'invention le dispositif d'introduction est caractérisé en ce que chaque conduit d'amenée en gaz additionnels est muni de moyens obturateurs pilotant l'injection de gaz additionnels dans la chambre de combustion, ces moyens obturateurs étant commandés à partir des valeurs prises par au moins un paramètre de fonctionnement dudit moteur.

Le dispositif d'introduction de gaz additionnels concerne plus particulièrement un moteur à combustion interne ayant une chambre de combustion alimentée en air comburant à partir d'un collecteur principal par deux conduits d'admission principaux jumelés ou séparés, débouchant chacun par un siège distinct sur lequel peut s'appliquer une soupape.

Selon une autre caractéristique de l'invention, le dispositif d'introduction est alors caractérisé en ce qu'il comprend un conduit d'admission secondaire de plus petit diamètre, débouchant dans chacun desdits conduits principaux.

Selon une autre caractéristique du dispositif, les deux conduits d'admission secondaires alimentant la chambre de combustion sont connectés chacun à un circuit d'amenée en gaz additionnels distinct.

Selon une autre caractéristique du dispositif, chaque conduit d'amenée en gaz additionnels comprend un collecteur secondaire alimenté par un conduit adapté à partir d'une source de gaz additionnels.

Selon une autre caractéristique du dispositif, l'un des conduits d'admission secondaires est apte à alimenter la chambre de combustion en air frais, l'autre conduit d'admission secondaire étant apte à alimenter ladite chambre en gaz d'échappement.

Selon une autre caractéristique du dispositif, lesdits moyens obturateurs sont constitués par des électrovannes commandées à partir du calculateur d'injection.

On comprendra mieux les buts, aspects et avantages de la présente invention, d'après la description donnée ci-après d'un mode de réalisation de l'invention, donné à titre d'exemple non limitatif, en se référant au dessin annexé, dans lequel :

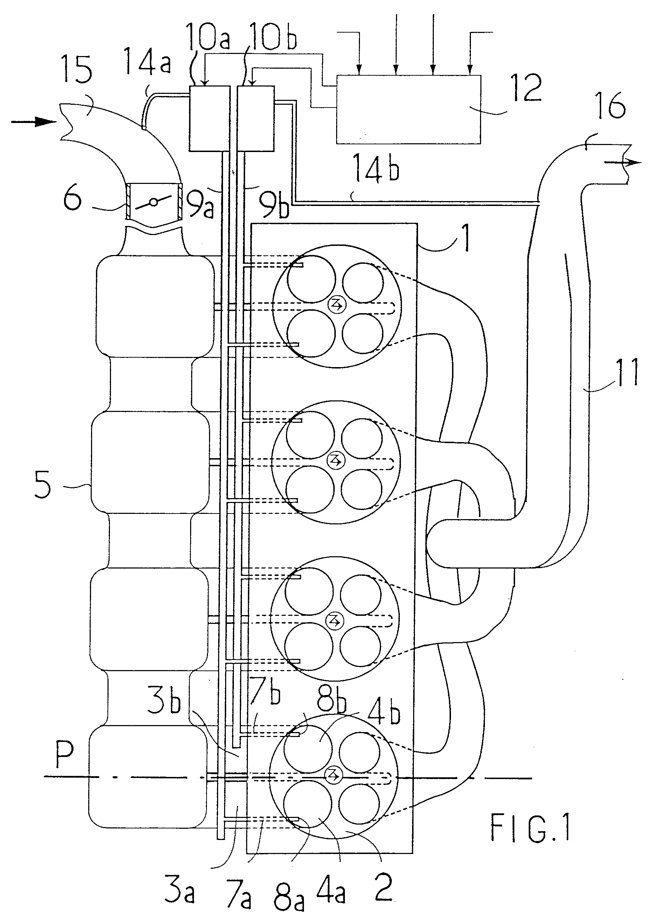

la figure 1 est une vue schématique montrant un dispositif d'introduction de gaz additionnels selon la présente invention.

La figure 1 représente donc un moteur à combustion interne à quatre chambres de combustion cylindriques (encore appelées cylindres) disposées en ligne, dont seuls ont été figurés les éléments intéressant l'invention, à savoir schématiquement une culasse (1) à quatre soupapes par cylindre (1), un collecteur d'échappement (11), et un système d'admission décrit ci-après.

La culasse (1) est traversée par des conduits d'admission principaux au nombre de deux par cylindre. Pour un cylindre (2) donné, ces deux conduits d'admission principaux (3a,3b) s'étendent séparément et en parallèle de part et d'autre d'un plan médian vertical (P) passant par l'axe du cylindre. Les deux conduits principaux (3a,3b) débouchent directement dans la chambre (2) par un siège (4a,4b) sur lequel peut s'appliquer une soupape.

Ces conduits principaux (3a,3b) sont raccordés directement à un collecteur d'air ou plénum (5). Ce collecteur d'air principal (5) est alimenté en air comburant par l'intermédiaire d'un conduit (15) débouchant à l'atmosphère, un boîtier papillon (6) à un ou plusieurs corps pilotant le débit d'air alimentant les chambres de combustion.

Les gaz additionnels sont introduits dans les cylindres par des conduits d'admission spécifiques désignés ci-après conduits d'admission secondaires, de plus petit diamètre et débouchant chacun dans un conduit principal peu avant la soupape d'admission.

Ainsi le cylindre (2) est alimenté par deux conduits secondaires (7a,7b) débouchant respectivement dans les conduits principaux (3a,3b). Ces conduits secondaires (7a,7b) débouchent par un orifice respectif (8a,8b) défini de façon à pouvoir générer deux jets de gaz sensiblement parallèles et symétriques de part et d'autre du plan médian (P).

Chacun des deux conduits secondaires (7a,7b) est relié à un circuit d'amenée de gaz additionnels constitué par un collecteur distinct (9a,9b), appelé encore collecteur secondaire, et d'un conduit (14a,14b) alimentant le collecteur à partir d'une source de gaz additionnels. Deux circuits distincts assurent donc l'amenée des gaz additionnels et chacun de ces circuits véhicule des gaz additionnels distincts. Le collecteur (9a) est connecté au circuit d'amenée (15) de l'air frais au collecteur principal (5), en amont du papillon (6). Le collecteur (9b) est lui connecté à la ligne d'échappement (16) des gaz brûlés. Le dimensionnement des diamètres d'orifice, ou calibrages, est donc adapté pour tenir compte de la nature distincte des gaz additionnels véhiculés par chacun des conduits.

Chaque circuit d'amenée des gaz additionnels, air frais ou gaz d'échappement est piloté par des moyens obturateurs, constitués par une électrovanne (10a,10b) disposée en amont du collecteur secondaire (9a,9b). Cette électrovanne est commandée, en fonction d'au moins un paramètre de fonctionnement du moteur, directement par le calculateur d'injection (12).

Le fonctionnement du dispositif qui vient d'être décrit est simple. A partir d'une cartographie prédéterminée prenant en compte un ou plusieurs paramètres de fonctionnement du moteur, par exemple le régime, la charge, la température d'eau. Le calculateur d'injection (12) pilote les électrovannes (10a,10b) de manière à générer dans les chambres de combustion soit aucun jet, soit un seul jet de gaz additionnels (air frais ou gaz d'échappement) soit encore, deux jets de gaz additionnels. Compte tenu de l'orientation des orifices de sortie (8a,8b) des conduits secondaires (7a,7b) desservant une chambre de combustion (2), lorsqu'un seul jet est activé, le flux de gaz additionnels pénètre dans la chambre de combustion de manière désaxée et provoque une turbulence hélicoïdale ou "swirl". Lorsque les deux jets sont activés simultanément, les deux flux pénètrent symétriquement dans la chambre de combustion en générant une turbulence en rouleau ou "tumble".

Par ailleurs l'utilisation de deux types de gaz additionnels, air frais et/ou gaz d'échappement, permet d'ajuster au mieux les caractéristiques du mélange admis dans les chambres de combustion. Par exemple, sur les zones de fonctionnement les plus chargées des cycles normalisés où la stabilité du moteur est correcte, on va privilégier une forte recirculation des gaz d'échappement pour obtenir une efficacité importante en dépollution sur les oxydes d'azotes.

Les deux conduits d'admission secondaires par cylindre (7a,7b) peuvent être reliés à un même et unique collecteur secondaire. Dans ce cas, les deux jets additionnels par cylindre sont constitués d'un gaz de même nature qui peut être soit de l'air frais soit du gaz d'échappement, soit un mélange des deux.

Aussi le ou les collecteurs secondaires peuvent être alimentés : uniquement en air frais ou uniquement en gaz d'échappement ou encore, par l'intermédiaire d'une vanne trois voies adéquate, successivement ou simultanément en air frais et en gaz d'échappement.

Ainsi les moyens obturateurs (10a,10b) peuvent être commandés électriquement et/ou pneumatiquement.

## Revendications

1. Procédé d'introduction de gaz additionnels, pour un moteur à combustion interne équipant notamment un véhicule automobile et comportant au-moins une chambre de combustion cylindrique (2), par lequel pour certaines plages de valeurs prédéfinies d'un ou de plusieurs paramètres de fonctionnement dudit moteur, un dispositif d'introduction de gaz additionnels actionne deux jets parallèles de gaz additionnels qui pénètrent simultanément dans la chambre de combustion (2) de façon symétrique de part et d'autre d'un plan médian vertical (P), pour provoquer dans ladite chambre (2) une turbulence de type rouleau ou "tumble", caractérisé en ce que pour d'autres plages de valeurs prédéfinies d'un ou de plusieurs paramètres de fonctionnement dudit moteur, ledit dispositif d'introduction actionne seulement un jet de gaz additionnels qui pénètre de façon excentrée dans la chambre de combustion (2), pour provoquer dans ladite chambre (2) une turbulence de type hélicoïdale ou "swirl".

2. Procédé d'introduction de gaz additionnels selon la revendication 1, caractérisé en ce que les gaz additionnels ainsi injectés dans la chambre de combustion (2), sont formés d'air frais et/ou de gaz d'échappement suivant le fonctionnement du moteur.

3. Moteur à combustion interne avec un dispositif d'introduction de gaz additionnels pour la mise en oeuvre du procédé selon l'une quelconque des revendications 1 à 2, la chambre de combustion (2) dudit moteur étant alimentée en air comburant par au moins deux conduits d'admission principaux (3a,3b) débouchant chacun dans ladite chambre (2) par un siège distinct (4a,4b) sur lequel peut s'appliquer une soupape, avec deux conduits d'admission secondaires (7a,7b) connectés chacun à au moins un circuit d'amenée en gaz additionnels ((9a,14a),(9b,14b)), chacun desdits conduits secondaires (7a,7b) débouchant dans un conduit principal correspondant (3a,3b), de façon à pouvoir injecter les gaz additionnels dans la chambre de combustion (2) à travers ledit siège (4a,4b) par un orifice de sortie (8a,8b) situé avant la soupape d'admission et dirigé de façon que des gaz additionnels, sortant simultanément des deux orifices (8a,8b), engendrent deux jets de gaz additionnels dans ladite chambre (2) sensiblement parallèles et symétriques de part et d'autre du plan médian vertical (P), caractérisé en ce que chaque conduit d'amenée en gaz additionnel est muni de moyens obturateurs (10a,10b) pilotant l'injection de gaz additionnels dans la chambre de combustion (2) et commandés à partir des valeurs prises par au moins un paramètre de fonctionnement dudit moteur.

4. Moteur à combustion interne avec un dispositif d'introduction de gaz additionnels selon la revendication 3, la chambre de combustion (2) dudit moteur étant alimentée en air comburant à partir d'un collecteur principal (5) par deux conduits d'admission principaux jumelés ou séparés (3a,3b), débouchant chacun par un siège distinct (4a,4b) sur lequel peut s'appliquer une soupape, caractérisé en ce qu'il comprend un conduit d'admission secondaire (7a,7b), de plus petit diamètre, débouchant dans chacun desdits conduits principaux (3a,3b).

5. Moteur à combustion interne avec un dispositif d'introduction de gaz additionnels selon l'une quelconque des revendications 3 à 4, caractérisé en ce que les deux conduits d'admission secondaires (7a,7b) alimentant la chambre de combustion (2) sont connectés chacun à un circuit d'amenée en gaz additionnels distinct.

6. Moteur à combustion interne avec un dispositif d'introduction de gaz additionnels selon l'une quelconque des revendications 3 à 5, caractérisé en ce que chaque conduit d'amenée en gaz additionnels comprend un collecteur secondaire (9a,9b) alimenté par un conduit adapté (14a,14b) à partir d'une source de gaz additionnels (15,16).

7. Moteur à combustion interne avec un dispositif d'introduction de gaz additionnels selon l'une quelconque des revendications 3 à 6, caractérisé en ce que l'un des conduits d'admission secondaire (9a) est apte à alimenter la chambre de combustion (2) en air frais et en ce que l'autre conduit d'admission secondaire (9b) est apte à alimenter ladite chambre (2) en gaz d'échappement.

8. Moteur à combustion interne avec un dispositif d'introduction de gaz additionnels selon l'une quelconque des revendications 3 à 7, caractérisé en ce que lesdits moyens obturateurs sont constitués par des électrovannes (10a,10b) commandées à partir du calculateur d'injection (12).

## Claims

1. A method of introducing additional gases, for an internal combustion engine fitted in particular in an automobile vehicle and comprising at least one cylindrical combustion chamber (2), by means of which, for certain predetermined ranges of values of one or a plurality of operating parameters of the engine, a device for introducing additional gases actuates two parallel jets of additional gases which penetrate simultaneously into the combustion chamber (2) in a symmetrical manner on either side of a vertical median plane (P), in order to cause a turbulence of roll or "tumble" type in this chamber (2), characterised in that for other predetermined rages of values of one or a plurality of operating parameters of the engine, the introduction device actuates only one jet of additional gases which penetrates in an off-centre manner into the combustion chamber (2) to cause a turbulence of helical or "swirl" type in this chamber (2).

2. A method of introducing additional gases as claimed in claim 1, characterised in that the additional gases injected in this way into the combustion chamber (2) are formed by fresh air and/or exhaust gases depending on the operation of the engine.

3. An internal combustion engine with a device for introducing additional gases for the application of the method as claimed in any one of claims 1 and 2, the combustion chamber (2) of the engine being supplied with combustion air via at least two main admission ducts (3a, 3b) each opening into this chamber (2) via a separate seat (4a, 4b) on which a valve may be applied, with two secondary admission ducts (7a, 7b) each connected to at least one additional gas supply circuit (9a, 14a; 9b, 14b), each of these secondary ducts (7a, 7b) opening into a corresponding main duct (3a, 3b) so as to be able to inject the additional gases into the combustion chamber (2) through this seat (4a, 4b) via an outlet orifice (8a, 8b) disposed in front of the admission valve and directed such that the additional gases, as they emerge simultaneously from the two orifices (8a, 8b), generate two jets of additional gases in this chamber (2) which are substantially parallel and symmetrical on either side of the vertical median plane (P), characterised in that each additional gas supply duct is provided with obturator means (10a, 10b) piloting the injection of additional gases into the combustion chamber (2) and controlled from the values assumed by at least one operating parameter of the engine.

4. An internal combustion engine with a device for introducing additional gases as claimed in claim 3, where the combustion chamber (2) of the engine is supplied with combustion air from a main manifold (5) via two main, twinned or separate, admission ducts (3a, 3b) each opening via a separate seat (4a, 4b) on which a valve may be applied, characterised in that it comprises a secondary admission duct (7a, 7b), of smaller diameter, opening into each of these main ducts (3a, 3b).

5. An internal combustion engine with a device for introducing additional gases as claimed in any one of claims 3 and 4, characterised in that the two secondary admission ducts (7a, 7b) supplying the combustion chamber (2) are each connected to a separate additional gas supply circuit.

6. An internal combustion engine with a device for introducing additional gases as claimed in any one of claims 3 to 5, characterised in that each additional gas supply duct comprises a secondary manifold (9a, 9b) supplied via an adapted duct (14a, 14b) from a source of additional gases (15, 16).

7. An internal combustion engine with a device for introducing additional gases as claimed in any one of claims 3 to 6, characterised in that one of the secondary admission ducts (9a) is adapted to supply the combustion chamber (2) with fresh air and in that the other secondary admission duct (9b) is adapted to supply this chamber (2) with exhaust gases.

8. An internal combustion engine with a device for introducing additional gases as claimed in any one of claims 3 to 7, characterised in that the obturator means are formed by electrovalves (10a, 10b) controlled by an injection calculator (12).

## Patentansprüche

1. Verfahren zur Einfuhrung zusätzlicher Gase in einen Verbrennungsmotor, der insbesondere in ein Kraftfahrzeug eingebaut ist und der Wenigstens eine zylindrische Verbrennungskammer aufweist, wobei für bestimmte vorgegebene Bereiche von Werten eines oder mehrerer Funktionsparameter des Motors eine Vorrichtung zur Einführung zusätzlicher Gase zwei parallele Ströme zusätzlicher Gase betätigt, welche gleichzeitig in die Verbrennungskammer (2) symmetrisch und beidseits einer vertikalen Mittenebene (P) eintreten, um in der Kammer (2) eine Turbulenz vom Typ Walze (Rouleau) oder Tumble zu erzeugen, dadurch gekennzeichnet, daß für andere Bereiche von vorgegebenen Werten eines oder mehrere Funktionsparameter des Motors die Vorrichtung zur Einführung ausschließlich einen Strom an zusätzlichem Gas betätigt, welcher in exzentrischer Weise in die Verbrennungskammer (2) eintritt, um in der Kammer (2) eine Turbulenz vom Typ Schraubenlinienform oder Swirl zu erzeugen.

2. Verfahren zur Einführung zusätzlicher Gase nach Anspruch 1, dadurch gekennzeichnet, daß die derart in die Verbrennungskammer (2) eingeblasenen zusätzlichen Gase aus Frischluft und/oder Abgas bestehen, je nach Betriebsweise des Motors.

3. Verbrennungsmotor mit einer Vorrichtung zur Einführung zusätzlicher Gase zur Durchführung des Verfahrens nach einem der Ansprüche 1 bis 2, bei dem die Verbrennungskammer (2) des Motors mit Verbrennungsluft über wenigstens zwei Haupteinlässe (3a, 3b) versorgt wird, deren jeder in die Kammer (2) über einen getrennten Sitz (4a, 4b) mündet und auf dem sich ein Ventil abstützen kann, wobei zwei zusätzliche Einlaßleitungen (7a, 7b) mit jeweils wenigstens einem Zufuhrkreis für zusätzliche Gase (9a, 14a, 9b, 14b) verbunden sind und jede der zweiten Leitungen (7a, 7b) in eine zugehörige Hauptleitung (3a, 3b) mündet, um dergestalt die zusätzlichen Gase in die Verbrennungskammer (2) einzublasen, durch den Sitz (4a, 4b) hindurch mittels einer Auslaßöffnung (8a, 8b), die vordem Einlaßventil angeordnet ist und die derart angesteuert wird, daß die aus den beiden Öffnungen (8a, 8b) gleichzeitig austretenden zusätzlichen Gase zwei Ströme aus zusätzlichem Gas in der Kammer (2) im wesentlichen parallel und beidseits der vertikalen Mittenebene (P) erzeugen, dadurch gekennzeichnet, daß jede Zufuhrleitung für die zusätzlichen Gase mit einer Verschlußanordnung (10a, 10b) versehen ist, welche das Einblasen der zusätzlichen Gase in die Verbrennungskammer (2) regelt, wobei sie ausgehend von Werten angesteuert wird, die von wenigstens einem Funktionsparameter des Motors abgeleitet werden.

4. Verbrennungsmotor mit einer Vorrichtung zur Einführung zusätzlicher Gase nach Anspruch 3, bei dem die Verbrennungskammer (2) des Motors mit Verbrennungsluft versorgt wird, ausgehend von einem Hauptsammler (5) über zwei miteinander verbundene oder getrennte Haupteinlaßleitungen (3a, 3b), deren jede in die Kammer (2) über einen getrennten Sitz (4a, 4b) mündet, auf dem sich ein Ventil abstützen kann, dadurch gekennzeichnet, daß er eine zweite Einlaßleitung (7a, 7b) aufweist mit geringerem Durchmesser, die in den beiden Haupteinlaßleitungen (3a, 3b) mündet.

5. Verbrennungsmotor mit einer Vorrichtung zur Einführung zusätzlicher Gase nach einem der Ansprüche 3 und 4, dadurch gekennzeichnet, daß die beiden zweiten Einlaßleitungen (7a, 7b) für die Versorgung der Verbrennungskammer (2) jeweils mit einem getrennten Zufuhrkreis für zusätzliche Gase verbunden sind.

6. Verbrennungsmotor mit einer Vorrichtung zur Einführung zusätzlicher Gase nach einem der Ansprüche 3 bis 5, dadurch gekennzeichnet, daß jede Zufuhrleitung für zusätzliche Gase einen zweiten Sammler (9a, 9b) aufweist, der durch einen geeigneten Kreis (14a, 14b) ausgehend von einer Quelle (15, 16) für zusätzliche Gase gespeist wird.

7. Verbrennungsmotor mit einer Vorrichtung zur Einführung zusätzlicher Gase nach einem der Ansprüche 3 bis 6, dadurch gekennzeichnet, daß eine (9a) der zweiten Einlaßleitungen die Verbrennungskammer (2) mit Frischluft versorgen kann und daß die andere (9b) der zweiten Einlaßleitungen die Verbrennungskammer (2) mit Abgas versorgen kann.

8. Verbrennungsmotor mit einer Vorrichtung zur Einführung zusätzlicher Gase nach einem der Ansprüche 3 bis 7, dadurch gekennzeichnet, daß die Verschlußanordnung aus Elektroventilen (10a, 10b) besteht, die ausgehend vom Einspritzrechner (12) angesteuert werden.
